# EUROPEAN PATENT SPECIFICATION

(11) **EP 3 140 024 B1**
(45) Date of publication and mention of the grant of the patent: **06.06.2018**
(21) Application number: 15738816.6
(22) Date of filing: 27.04.2015
(51) Int. Cl.: B01D 53/26, F25B 41/04

(54) **METHOD AND DEVICE FOR COOL DRYING A GAS**
VERFAHREN UND VORRICHTUNG ZUM KÜHLTROCKNEN EINES GASES
PROCÉDÉ ET DISPOSITIF DE SÉCHAGE À FROID D'UN GAZ

(30) Priority: 09.05.2014 BE 201400346
(43) Date of publication of application: 15.03.2017
(73) Proprietor: Atlas Copco Airpower, Naamloze Vennootschap, 2610 Wilrijk (BE)
(72) Inventor: DE HERDT, Johan Hendrik, R., B-2610 Wilrijk (BE); BALTUS, Frits Cornelis A., B-2610 Wilrijk (BE); KOOYMAN, Maarten, B-2610 Wilrijk (BE); ROELANTS, Frank Jacques, E., B-2610 Wilrijk (BE)
(74) Representative: Donné, Eddy
(86) International application number: PCT/BE2015/000015
(87) International publication number: WO 2015/168754

(56) References cited:
- EP-A1- 1 103 296
- CN-U- 201 811 509
- US-A1- 2002 174 665
- US-A1- 2003 014 988
- US-B1- 6 467 292

## Description

The present invention relates to a method and device for cool drying a gas.

More specifically, the invention is intended for cool drying a gas, whereby water vapour in the gas is condensed by guiding the gas through the secondary section of a heat exchanger whose primary section forms the evaporator of a closed cooling circuit in which a coolant can circulate by means of a compr>essor that is installed in the cooling circuit downstream from the evaporator and which is followed by a condenser and expansion means through which the coolant can circulate.

Cool drying is, as is known, based on the principle that by lowering the gas temperature the moisture in the gas condenses, after which the condensate is separated in a liquid separator and after which the gas is again heated such that this gas is no longer saturated.

It is known that in most cases compressed air, supplied by a compressor for example, is saturated with water vapour or, in other words, it has a relative humidity of 100%. This means that in the event of a temperature drop to below the 'dew point' condensation occurs. Because of the condensed water corrosion occurs in the pipes and tools that draw off compressed air from the compressor, and equipment can present premature wear.

It is consequently necessary to dry this compressed air, which can be done in the aforementioned way by cool drying. Air other than compressed air or other gases can also be dried in this way.

Methods for cool drying a gas are already known, whereby the expansion means in the cooling circuit are formed by a thermostatic expansion valve that expands just enough coolant so that the coolant always enters the compressor superheated. An example for such method is disclosed in US6467292B1. Due to this superheating the liquid coolant present can be evaporated before it is guided to the compressor in order to give the compressor optimum protection against liquid coolant.

The superheating of the coolant can be determined on the basis of the measurements of the evaporator pressure and the evaporator temperature, and it can be determined whether the expansion valve has to be opened more or less in order to control the superheating of the coolant in this way.

In transitional situations, for example when starting up or shutting down the cooling circuit, the superheating cannot be guaranteed by the thermostatic expansion valve.

As a result it is possible that liquid coolant is still present after the evaporator.

When the compressor draws in this liquid coolant damage can occur to the compressor.

As a result it is necessary to integrate a liquid separator in the cooling circuit. This liquid separator, as a last safety device, prevents liquid coolant from being able to be drawn in by the compressor.

The required integration of the liquid separator makes the device more expensive and complex.

An additional disadvantage is that when the liquid separator does not function properly, the compressor can still draw in liquid coolant.

The purpose of the present invention is to provide a solution to at least one of the aforementioned and other disadvantages.

The present invention has a method for cool drying a gas, whereby water vapour in the gas is condensed by guiding the gas through the secondary section of a heat exchanger whose primary section forms the evaporator of a closed cooling circuit in which a coolant can circulate by means of a compressor that is installed in the cooling circuit downstream from the evaporator, and which is followed by a condenser and expansion means through which the coolant can circulate and a bypass pipe with a hot gas bypass valve therein that connects the outlet of the compressor to an injection point upstream from the compressor, whereby use is made of a closed cooling circuit without a liquid separator, in which the method consists of making use of an electronic expansion valve as expansion means with a control of the desired degree of superheating of the coolant and controlling this electronic expansion valve such that the coolant is always superheated at the input of the compressor and wherein the method also consists of making use of an electronic hot gas bypass valve.

An advantage of such a method is that such a control of the electronic expansion valve will ensure that the coolant after the evaporator is always sufficiently superheated to evaporate all coolant that may still be present after the evaporator.

As a result there is no liquid coolant in the cooling circuit at the compressor inlet.

Consequently the liquid separator at the compressor inlet can be omitted.

This makes the device cheaper, simpler and more reliable.

In a practical embodiment the method comprises the following steps at the start-up of the cooling circuit:
- switching off the control and keeping the electronic expansion valve closed;
- simultaneous controlling the hot gas bypass valve until the evaporator pressure has reached a desired value;
- then switching on the control of the electronic expansion valve to achieve the desired degree of superheating of the coolant after the evaporator.

In a further preferred practical embodiment the method comprises the following steps when switching off the cooling circuit:
- switching off the control and the complete closure of the electronic expansion valve;
- simultaneous controlling the electronic hot gas bypass valve so that the evaporator pressure remains constant;
- then switching off the compressor.

Such controls of the electronic expansion valve and the electronic hot gas bypass valve will prevent liquid coolant from being present at the compressor inlet in transitional situations upon the start-up and switching off of the cooling circuit.

An additional advantage is that both aforementioned controls are very simple to realise and only require the measurement of the evaporator pressure and if need be the superheating of the coolant.

The invention also concerns a device for cool drying a gas, whereby water vapour in the gas is condensed by cooling the gas, whereby this device is provided with a heat exchanger with a secondary section through which the gas to be dried is guided to cool the gas and with a primary section that forms the evaporator of a closed cooling circuit in which a coolant can circulate by means of a compressor downstream from the evaporator, whereby downstream between the compressor and the evaporator the cooling circuit successively comprises a condenser and expansion means through which the coolant can circulate and a bypass pipe with a hot gas bypass valve therein that connects the compressor outlet to an injection point upstream from the compressor, whereby the closed cooling circuit does not contain a liquid separator and that the expansion means are formed by an electronic expansion valve for controlling a desired degree of superheating of the coolant after the evaporator, whereby the device comprises a control unit that will control the expansion valve such that the coolant is always superheated at the compressor input whereby the hot gas bypass valve is an electronic hot gas bypass valve that is also controlled by the control unit.

Such a device has similar advantages to a method according to the invention.

With the intention of better showing the characteristics of the invention, a few preferred variants of a method and device according to the invention are described hereinafter by way of an example, without any limiting nature, with reference to the accompanying drawings, wherein:
figure 1 schematically shows a perspective view of a device according to the invention;
figure 2 schematically shows a method according to the invention during the operation of the device of figure 1.

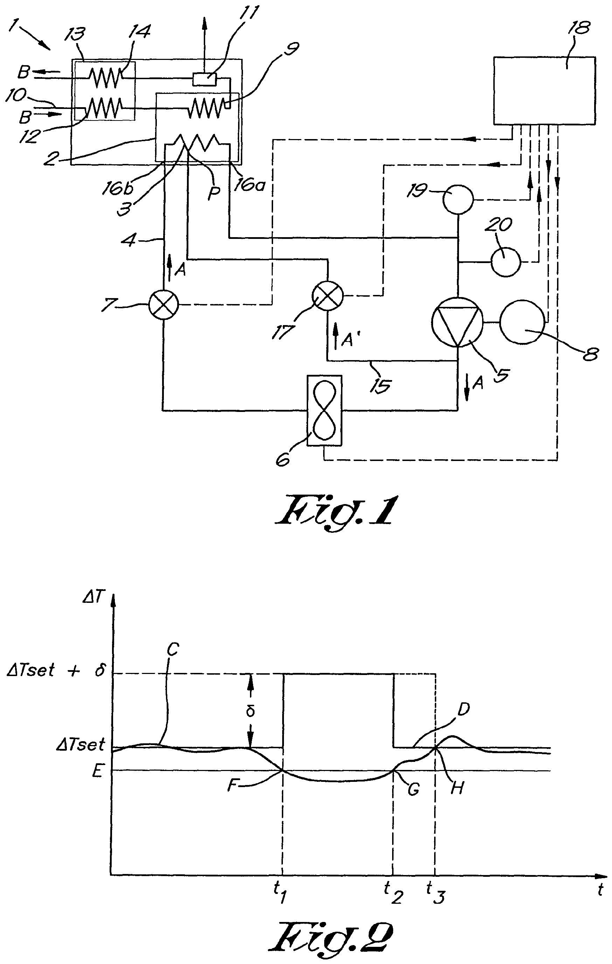

The device 1 shown in figure 1 for cool drying essentially consists of a heat exchanger 2 whose primary section forms the evaporator 3 of a closed cooling circuit 4, in which a compressor 5, a condenser 6 and an electronic expansion valve 7 are also placed in succession.

In this case the compressor 5 is driven by a motor 8 and is used to enable the circulation of a coolant through the cooling circuit 4 according to arrow A. The compressor 5 can be a volumetric compressor for example, while the motor 8 is an electric motor for example.

The coolant can be R404a for example, but the invention is of course not limited as such.

The secondary section 9 of the heat exchanger 2 forms part of a pipe 10 for moist air to be dried whose flow direction is indicated by arrow B. The entrance of this pipe 10 can be connected to a compressor outlet for example for the supply of compressed air to be dried.

After the secondary section 9 of the heat exchanger 2, more specifically at its output, a liquid separator 11 is installed in the pipe.

In this case a section 12 of this pipe 10, before it reaches the secondary section 9 of the heat exchanger 2, extends through a precooler or recovery heat exchanger 13. After the secondary section 9 a section 14 of this pipe 10 also extends through this recovery heat exchanger 13 with the opposite direction of flow to the aforementioned section 12.

The heat exchanger is a liquid coolant-air heat exchanger and constructionally can form a unit with any recovery heat exchanger 13 that is an air-air heat exchanger.

The output of the aforementioned pipe 10 can be connected to a compressed air network (not shown in the drawings) for example to which compressed air consumers are connected, such as tools driven by compressed air.

The compressor 5 is bypassed by a bypass pipe 15 that connects the outlet of the compressor 5 to an injection point P that is located upstream from the compressor , and in this case upstream from the outlet 16a of the evaporator 3, but downstream from the inlet 16b of the evaporator 3.

It is clear that the injection point P can be at any possible location in the cooling circuit 4 downstream from the electronic expansion valve 7 and upstream from the compressor 5.

The bypass pipe 15 is provided with an electronic hot gas bypass valve 17 for tapping off coolant in the cooling circuit 4.

The device 1 is further provided with a control unit 18. The control unit 18 is connected to the motor 8, the condenser 6, the expansion valve 7 and the hot gas bypass valve 17 for the control thereof.

The control unit 18 is also connected to means 19 to determine the evaporator temperature Tᵥ and means 20 to determine the evaporator pressure pᵥ.

It is clear that it is not excluded that means are provided to determine the lowest gas temperature (LAT) of the gas to be dried.

The method for cool drying by means of a device 1 according to figure 1 is very simple and as follows.

The air to be dried is carried through the pipe 10 and thus through the secondary section 9 of the heat exchanger 2 according to arrow B.

In this heat exchanger 2 the moist air is cooled under the influence of the coolant that flows through the primary section of the heat exchanger 2 and thus the evaporator 3 of the cooling circuit 4.

As a result condensate is formed that is separated in the liquid separator 11.

The cold air that contains less moisture in absolute terms after this liquid separator 11, but which has a relative humidity of 100%, is heated in the recovery heat exchanger 13 under the influence of the newly supplied air to be dried, such that the relative humidity falls to preferably below 50%, while the new air to be dried in the recovery heat exchanger 13 is already partially cooled before being transported to the heat exchanger 2.

The air at the output of the recovery heat exchanger 13 is thus drier than at the input of the heat exchanger 2.

In order to be able to cool the moist air to be cooled in the secondary section 9 of the heat exchanger 2, the coolant is guided through the cooling circuit 4 in the direction of arrow A through the evaporator 3 or the primary section of the heat exchanger 2.

The hot coolant that comes from the evaporator 3 is in the gas phase and will be raised to a higher pressure by the compressor 5, then cooled in the condenser 6 and condensed.

The liquid, cold coolant will then be expanded by the expansion valve 7 and will cool further, before being driven to the evaporator 3 to cool the air to be dried there.

The expansion valve 7 will be controlled by the control unit 18 such that the desired degree of superheating ΔTₛₑₜ of the coolant is obtained.

The coolant will warm up due to the effect of heat transfer in the evaporator 3, evaporate and be guided to the compressor 5 again.

The hot gas bypass valve 17 in the bypass pipe 15 will ensure that when the air in the heat exchanger 2 cools too much, for example with a variable load of the device 1, a certain quantity of coolant in the form of hot gas is driven across the compressor via the aforementioned bypass pipe 15 in the direction of the arrow A'. In this way the cooling capacity of the device 1 can decrease and can prevent the condensate from freezing in the heat exchanger 2 or the coolant temperature from falling too much.

As coolant is driven to the evaporator 3 by means of the bypass pipe 15, the evaporator pressure pᵥ can be adjusted by controlling the hot gas bypass valve 17.

According to the invention the control unit 18 will control the expansion valve 7 such that the coolant at the compressor 5 input is already superheated, whereby the hot gas bypass valve 17 is controlled in a suitable way.

In this case when starting up the cooling circuit 4 the control unit 18 will ensure that the expansion valve 7 is kept closed.

In the first instance the control unit 18 will adjust the hot gas bypass valve 17 until the evaporator pressure pᵥ has reached a desired value.

On the basis of the signal from the means 20, the control unit will start the normal control of the expansion valve 7 when the evaporator pressure pᵥ has reached the desired value and adjust the expansion valve 7 so that the desired degree of superheating ΔTₛₑₜ of the coolant is reached after the evaporator 3.

When switching off the cooling circuit 4 the control unit will first fully close the expansion valve 7.

Preferably the control unit will gradually close the expansion valve 7. This can be done in steps or continuously over a period of 20 seconds for example.

In the meantime the hot gas bypass valve is controlled such that the evaporator pressure pᵥ remains constant.

When the expansion valve 7 is closed, the control unit 18 will stop the motor 8 of the compressor 5.

In this case, during the operation of the cooling circuit 4 the control unit 18 will determine the degree of superheating ΔT of the coolant on the basis of the means 19 and 20.

The variation in the degree of superheating over time is shown by the curve C in figure 2.

The curve D shows the desired degree of superheating ΔTₛₑₜ on the basis of which the control unit 18 controls the expansion valve 17.

When the degree of superheating ΔT is below a certain threshold value E, the control unit 18 will increase the desired degree of superheating ΔT.

This is shown by point F at time t₁ in figure 2.

Preferably the control unit 18 increases the desired degree of superheating ΔTₛₑₜ by a certain value δ, as shown in figure 2.

Then the control unit 18 will control the expansion valve 7 on the basis of this increased desired value ΔTₛₑₜ + δ.

In this way a faster adjustment of the degree of superheating ΔT will be realised.

When the degree of superheating ΔT is again greater than the threshold value E, corresponding to the point G at time t₂ in figure 2, the control unit 18 will adjust the expansion valve 7 back on the basis of the original desired degree of superheating ΔTₛₑₜ.

It is also possible that the control unit 18 adjusts the expansion valve 7 back on the basis of the original desired degree ΔTₛₑₜ when the degree of superheating ΔT is greater than the original desired degree of superheating ΔTₛₑₜ. In figure 2 this corresponds to point H at time t₃.

The value δ with which the control unit 18 increases the desired degree of superheating ΔTₛₑₜ can be set beforehand or determined by the control unit 18 on the basis of the conditions applicable at that time for example.

When the degree of superheating ΔT falls sharply for example, it can be chosen to make the aforementioned δ relatively large to cancel the sharp fall as quickly as possible and to bring the degree of superheating ΔT back above the threshold value E.

Although in the example shown the threshold value E is different to the desired value of the superheating ΔTₛₑₜ, it is not excluded that the threshold value E is equal to the desired value of superheating ΔTₛₑₜ. The threshold value E can be chosen so that a desired safety margin is created.

Although in the example shown in figure 1 the device 1 is provided with only one heat exchanger 2, a number of heat exchangers 2 can also be provided.

## Claims

1. Method for cool drying a gas, whereby water vapour in the gas is condensed by guiding the gas through the secondary section (9) of a heat exchanger (2) whose primary section forms the evaporator (3) of a closed cooling circuit (4) in which a coolant can circulate by means of a compressor (5) that is installed in the cooling circuit (4) downstream from the evaporator (3), and which is followed by a condenser (6) and expansion means (7) through which the coolant can circulate and a bypass pipe (15) with a hot gas bypass valve (17) therein that connects the outlet of the compressor (5) to an injection point (P) upstream from the compressor (5), **characterised in that** use is made of a closed cooling circuit (4) without a liquid separator, in which the method consists of making use of an electronic expansion valve (7) as expansion means (7) with a control of the desired degree of superheating (ΔTₛₑₜ) of the coolant and controlling this electronic expansion valve (7) such that the coolant is always superheated at the input of the compressor (5) and wherein the method consists of making use of an electronic hot gas bypass valve (17), whereby during start-up of the cooling circuit (4) the method comprises the following steps:
- switching off the control and keeping the electronic expansion valve (7) closed;
- the simultaneous control of the hot gas bypass valve (17) until the evaporator pressure (pᵥ) has reached a desired value;
- then switching on the control of the electronic expansion valve (7) to reach the desired degree of superheating (ΔTₛₑₜ) of the coolant after the evaporator (3).

2. Method according to claim 1, **characterised in that** the method comprises the following steps when switching off the cooling circuit (4):
- switching off the control and completely closing the electronic expansion valve (7);
- the simultaneous control of the electronic hot gas bypass valve (17) so that the evaporator pressure (pᵥ) remains constant;
- then switching off the compressor (5).

3. Method according to claim 2, **characterised in that** when switching off the cooling circuit (4), the electronic expansion valve (7) is gradually closed.

4. Method according to any one of the previous claims, **characterised in that** during the operation of the cooling circuit (4) the degree of superheating (ΔT) of the coolant after the evaporator (3) is determined and that when the degree of superheating (ΔT) goes below a threshold value (E), the method comprises the following steps:
- increasing the desired degree of superheating (ΔTₛₑₜ) for the control of the expansion valve (7);
- as soon as the degree of superheating (ΔT) is greater than the aforementioned threshold value E, lowering the desired degree of superheating (ΔTₛₑₜ) for the control of the expansion valve (7) to the original desired degree (ΔTₛₑₜ).

5. Method according to claim 4, **characterised in that** during the step of increasing the desired degree of superheating (ΔTₛₑₜ) for the control of the expansion valve, the desired degree of superheating (ΔTₛₑₜ) is increased by a certain value (δ).

6. Method according to any one of the previous claims, **characterised in that** the injection point (P) is located downstream from the electronic expansion valve (7) and upstream from the compressor (5).

7. Method according to any one of the previous claims, **characterised in that** the method is used to dry gas that originates from a compressor.

8. Device for cool drying a gas, whereby water vapour in the gas is condensed by cooling the gas, whereby this device (1) is provided with a heat exchanger (2) with a secondary section (9) through which the gas to be dried is guided to cool the gas and with a primary section that forms the evaporator (3) of a closed cooling circuit (4) in which a coolant can circulate by means of a compressor (5) downstream from the evaporator (3), whereby downstream between the compressor (5) and the evaporator (3) the cooling circuit (4) successively comprises a condenser (6) and expansion means (7) through which the coolant can circulate and a bypass pipe (15) with a hot gas bypass valve (17) therein that connects the compressor (5) outlet to an injection point (P) upstream from the compressor (5), **characterised in that** the closed cooling circuit (4) does not contain a liquid separator and that the expansion means (7) are formed by an electronic expansion valve (7) for controlling a desired degree of superheating (ΔTₛₑₜ) of the coolant after the evaporator (3), whereby the device (1) comprises a control unit (18) that will control the expansion valve (7) such that the coolant is always superheated at the compressor (5) input, whereby the hot gas bypass valve (17) is an electronic hot gas bypass valve (17) that is also controlled by the control unit (18) and whereby when starting up the cooling circuit (4), the control unit (18) will control the electronic expansion valve (7) and the electronic hot gas bypass valve (17) such that the electronic expansion valve (7) is kept closed while the electronic hot gas bypass valve (17) is controlled until the evaporator pressure (pᵥ) has reached a desired value, after which the control unit (18) will control the electronic expansion valve (7) so that the desired degree of superheating (ΔTₛₑₜ) of the coolant after the evaporator (3) is reached.

9. Device according to claim 8, **characterised in that** when switching off the cooling circuit (4), the control unit (18) will control the electronic expansion valve (7) and the electronic hot gas bypass valve (17) such that the electronic expansion valve (7) is fully closed while the electronic hot gas bypass valve (17) keeps the evaporator pressure (pᵥ) constant before the compressor (5) is closed.

10. Device according to claim 9, **characterised in that** when switching off the cooling circuit (4), the control unit (18) gradually closes the electronic expansion valve (7).

11. Device according to any one of the previous claims 8 to 10, **characterised in that** the device (1) is provided with means (19, 20) to determine the degree of superheating (ΔT) of the coolant after the evaporator (3) whereby, when during operation of the cooling circuit (4) the degree of superheating (ΔT) goes below a threshold value (E), the control unit (18) will increase the desired degree of superheating (ΔTₛₑₜ) and control the electronic expansion valve (7) on the basis of this increased desired degree of superheating (ΔTₛₑₜ) until the degree of superheating (ΔT) is again higher than the aforementioned threshold value (E).

12. Device according to claim 11, **characterised in that** the control unit will increase the desired degree of superheating (ΔTₛₑₜ) by a certain value (δ).

13. Device according to any one of the previous claims 8 to 12, **characterised in that** the injection point (P) is located downstream from the electronic expansion valve (7) and upstream from the compressor (5).

14. Device according to any one of the previous claims 8 to 13, **characterised in that** the gas to be dried originates from a compressor.

## Patentansprüche

1. Verfahren zum Kühltrocknen eines Gases, wobei Wasserdampf in dem Gas kondensiert wird, indem das Gas durch den Sekundärteil (9) eines Wärmetauschers (2) geleitet wird, dessen Primärteil den Verdampfer (3) eines geschlossenen Kühlkreislaufs (4) bildet, worin ein Kühlmittel mittels eines Verdichters (5) zirkulieren kann, der in dem Kühlkreislauf (4) stromabwärts von dem Verdampfer (3) installiert ist und der gefolgt wird von einem Kondensator (6) und Expansionsmitteln (7), durch die das Kühlmittel zirkulieren kann, und einer Bypassleitung (15) mit darin einem Heißgas-Bypassventil (17), die den Auslass des Verdichters (5) mit einem Einspritzpunkt (P) stromaufwärts von dem Verdichter (5) verbindet, **dadurch gekennzeichnet, dass** von einem geschlossenen Kühlkreislauf (4) ohne Flüssigkeitsabscheider Gebrauch gemacht wird, wobei das Verfahren darin besteht, von einem elektronischen Expansionsventil (7) als Expansionsmittel (7) mit einer Regelung des gewünschten Überhitzungsgrades (ΔTₛₑₜ) des Kühlmittels Gebrauch zu machen und dieses elektronische Expansionsventil (7) derart zu regeln, dass das Kühlmittel am Einlass des Verdichters (5) stets überhitzt ist, und wobei das Verfahren daraus besteht, von einem elektronischen Heißgas-Bypassventil (17) Gebrauch zu machen, wobei während des Aufstartens des Kühlkreislaufs (4) das Verfahren die folgenden Schritte umfasst:
- Ausschalten der Regelung und Geschlossenhalten des elektronischen Expansionsventils (7);
- gleichzeitig Regeln des Heißgas-Bypassventils (17), bis der Verdampferdruck (pᵥ) einen gewünschten Wert erreicht hat;
- dann Einschalten der Regelung des elektronischen Expansionsventils (7), um den gewünschten Überhitzungsgrad (ΔTₛₑₜ) des Kühlmittels nach dem Verdampfer (3) zu erreichen.

2. Verfahren nach Anspruch 1, **dadurch gekennzeichnet, dass** das Verfahren beim Ausschalten des Kühlkreislaufs (4) die folgenden Schritte umfasst:
- Ausschalten der Regelung und vollständig Schließen des elektronischen Expansionsventils (7);
- gleichzeitig Regeln des elektronischen Heißgas-Bypassventils (17), sodass der Verdampferdruck (pᵥ) konstant bleibt;
- dann Ausschalten des Verdichters (5).

3. Verfahren nach Anspruch 2, **dadurch gekennzeichnet, dass** beim Ausschalten des Kühlkreislaufs (4) das elektronische Expansionsventil (7) allmählich geschlossen wird.

4. Verfahren nach einem der vorhergehenden Ansprüche, **dadurch gekennzeichnet, dass** während des Betriebs des Kühlkreislaufs (4) der Überhitzungsgrad (ΔT) des Kühlmittels nach dem Verdampfer (3) bestimmt wird und dass, wenn der Überhitzungsgrad (ΔT) unter einen Schwellenwert (E) sinkt, das Verfahren die folgenden Schritte umfasst:
- Erhöhen des gewünschten Überhitzungsgrades (ΔTₛₑₜ) zur Regelung des Expansionsventils (7);
- sobald der Überhitzungsgrad (ΔT) größer als der vorgenannte Schwellenwert E ist, Senken des gewünschten Überhitzungsgrades (ΔTₛₑₜ) zur Regelung des Expansionsventils (7) auf den ursprünglichen gewünschten Grad (ΔTₛₑₜ).

5. Verfahren nach Anspruch 4, **dadurch gekennzeichnet, dass**, während des Schritts des Erhöhens des gewünschten Überhitzungsgrades (ΔTₛₑₜ) zur Regelung des Expansionsventils, der gewünschte Überhitzungsgrad (ΔTₛₑₜ) um einen bestimmten Wert (δ) erhöht wird.

6. Verfahren nach einem der vorhergehenden Ansprüche, **dadurch gekennzeichnet, dass** sich der Einspritzpunkt (P) stromabwärts von dem elektronischen Expansionsventil (7) und stromaufwärts von dem Verdichter (5) befindet.

7. Verfahren nach einem der vorhergehenden Ansprüche, **dadurch gekennzeichnet, dass** das Verfahren zum Trocknen von Gas, das von einem Verdichter kommt, angewendet wird.

8. Vorrichtung zum Kühltrocknen eines Gases, wobei Wasserdampf in dem Gas kondensiert wird, indem das Gas gekühlt wird, wobei diese Vorrichtung (1) mit einem Wärmetauscher (2) mit einem Sekundärteil (9), durch den das zu trocknende Gas geleitet wird, um das Gas zu kühlen, und mit einem Primärteil, der den Verdampfer (3) eines geschlossenen Kühlkreislaufs (4) bildet, worin ein Kühlmittel mittels eines Verdichters (5) stromabwärts von dem Verdampfer (3) zirkulieren kann, versehen ist, wobei stromabwärts zwischen dem Verdichter (5) und dem Verdampfer (3) der Kühlkreislauf (4) aufeinanderfolgend einen Kondensator (6) und Expansionsmittel (7), durch die das Kühlmittel zirkulieren kann, und eine Bypassleitung (15) mit darin einem Heißgas-Bypassventil (17), die den Auslass des Verdichters (5) mit einem Einspritzpunkt (P) stromaufwärts von dem Verdichter (5) verbindet, umfasst, **dadurch gekennzeichnet, dass** der geschlossene Kühlkreislauf (4) keinen Flüssigkeitsabscheider enthält und dass die Expansionsmittel (7) durch ein elektronisches Expansionsventil (7) zur Regelung eines gewünschten Überhitzungsgrades (ΔTₛₑₜ) des Kühlmittels nach dem Verdampfer (3) gebildet werden, wobei die Vorrichtung (1) eine Steuereinheit (18) umfasst, die das Expansionsventil (7) so regeln wird, dass das Kühlmittel am Einlass des Verdichters (5) stets überhitzt ist, wobei das Heißgas-Bypassventil (17) ein elektronisches Heißgas-Bypassventil (17) ist, das ebenfalls von der Steuereinheit (18) angesteuert wird, und wobei, beim Aufstarten des Kühlkreislaufs (4), die Steuereinheit (18) das elektronische Expansionsventil (7) und das elektronische Heißgas-Bypassventil (17) so ansteuern wird, dass das elektronische Expansionsventil (7) geschlossen gehalten wird, während das elektronische Heißgas-Bypassventil (17) angesteuert wird, bis der Verdampferdruck (pᵥ) einen gewünschten Wert erreicht hat, wonach die Steuereinheit (18) das elektronische Expansionsventil (7) ansteuern wird, sodass der gewünschte Überhitzungsgrad (ΔTₛₑₜ) des Kühlmittels nach dem Verdampfer (3) erreicht wird.

9. Vorrichtung nach Anspruch 8, **dadurch gekennzeichnet, dass** beim Ausschalten des Kühlkreislaufs (4) die Steuereinheit (18) das elektronische Expansionsventil (7) und das elektronische Heißgas-Bypassventil (17) so ansteuern wird, dass das elektronische Expansionsventil (7) vollständig geschlossen wird, während das elektronische Heißgas-Bypassventil (17) den Verdampferdruck (pᵥ) konstant hält, bevor der Verdichter (5) geschlossen wird.

10. Vorrichtung nach Anspruch 9, **dadurch gekennzeichnet, dass** beim Ausschalten des Kühlkreislaufs (4) die Steuereinheit (18) das elektronische Expansionsventil (7) allmählich schließt.

11. Vorrichtung nach einem der vorhergehenden Ansprüche 8 bis 10, **dadurch gekennzeichnet, dass** die Vorrichtung (1) mit Mitteln (19, 20) zur Bestimmung des Überhitzungsgrades (ΔT) des Kühlmittels nach dem Verdampfer (3) versehen ist, wobei, wenn der Überhitzungsgrad (ΔT) während des Betriebs des Kühlkreislaufs (4) unter einen Schwellenwert (E) sinkt, die Steuereinheit (18) den gewünschten Überhitzungsgrad (ΔTₛₑₜ) erhöhen wird und das elektronische Expansionsventil (7) auf Basis dieses erhöhten gewünschten Überhitzungsgrades (ΔTₛₑₜ) ansteuern wird, bis der Überhitzungsgrad (ΔT) wieder höher als der vorgenannte Schwellenwert (E) ist.

12. Vorrichtung nach Anspruch 11, **dadurch gekennzeichnet, dass** die Steuereinheit den gewünschten Überhitzungsgrad (ΔTₛₑₜ) um einen bestimmten Wert (δ) erhöhen wird.

13. Vorrichtung nach einem der vorhergehenden Ansprüche 8 bis 12, **dadurch gekennzeichnet, dass** sich der Einspritzpunkt (P) stromabwärts von dem elektronischen Expansionsventil (7) und stromaufwärts von dem Verdichter (5) befindet.

14. Vorrichtung nach einem der vorhergehenden Ansprüche 8 bis 13, **dadurch gekennzeichnet, dass** das zu trocknende Gas von einem Verdichter kommt.

## Revendications

1. Procédé pour le séchage d'un gaz à froid, dans lequel de la vapeur d'eau dans le gaz est condensée en guidant le gaz à travers la zone secondaire (9) d'un échangeur de chaleur (2) dont la zone primaire forme l'évaporateur (3) d'un circuit de refroidissement fermé (4) dans lequel un agent de refroidissement peut circuler au moyen d'un compresseur (5) qui est monté dans le circuit de refroidissement (4) en aval par rapport à l'évaporateur (3), et qui est suivi d'un condenseur (6) et d'un moyen de détente (7) à travers lequel l'agent de refroidissement peut circuler et d'un conduit de dérivation (15) dans lequel est contenue une soupape de dérivation (17) pour les gaz chauds, qui relie la sortie du compresseur (5) à un point d'injection (P) en amont par rapport au compresseur (5), **caractérisé en ce qu'**il est fait usage d'un circuit de refroidissement fermé (4) exempt d'un séparateur de liquide, dans lequel le procédé consiste à faire usage d'une soupape de détente électronique (7) à titre de moyen de détente (7) avec un réglage du degré désiré de surchauffe (ΔTₛₑₜ) de l'agent de refroidissement et à commander cette soupape de détente électronique (7) d'une manière telle que l'agent de refroidissement est toujours surchauffé à l'entrée du compresseur (5), et dans lequel le procédé consiste à faire usage d'une soupape de dérivation électronique (17) pour les gaz chauds, dans lequel, au cours du démarrage du circuit de refroidissement (4), le procédé comprend les étapes suivantes consistant à :
- mettre hors tension la commande et maintenir fermée la soupape de détente électronique (7) ;
- commander de manière simultanée la soupape de dérivation (17) pour les gaz chauds jusqu'à ce que la pression de l'évaporateur (pᵥ) ait atteint une valeur désirée ;
- mettre ensuite sous tension la commande de la soupape de détente électronique (7) pour atteindre le degré désiré de surchauffe (ΔTₛₑₜ) de l'agent de refroidissement après l'évaporateur (3).

2. Procédé selon la revendication 1, **caractérisé en ce que** le procédé comprend les étapes suivantes, lors de la mise hors tension du circuit de refroidissement (4), consistant à :
- mettre hors tension la commande et fermer complètement la soupape de détente électronique (7) ;
- commander de manière simultanée la soupape de dérivation (17) pour les gaz chauds d'une manière telle que la pression de l'évaporateur (pᵥ) reste constante ;
- mettre ensuite hors tension le compresseur (5).

3. Procédé selon la revendication 2, **caractérisé en ce que**, lors de la mise hors tension du circuit de refroidissement (4), la soupape de détente électronique (7) est fermée de manière progressive.

4. Procédé selon l'une quelconque des revendications précédentes, **caractérisé en ce que**, au cours de l'activation du circuit de refroidissement (4), le degré de surchauffe (ΔT) de l'agent de refroidissement après l'évaporateur (3) est déterminé et **en ce que**, lorsque le degré de surchauffe (ΔT) devient inférieur à une valeur seuil (E), le procédé comprend les étapes suivantes consistant à :
- augmenter le degré désiré de surchauffe (ΔTₛₑₜ) pour la commande de la soupape de détente (7) ;
- dès que le degré de surchauffe (ΔT) est supérieur à la valeur seuil susmentionnée (E), diminuer le degré désiré de surchauffe (ΔTₛₑₜ) pour la commande de la soupape de détente (7) jusqu'au degré désiré initial (ΔTₛₑₜ).

5. Procédé selon la revendication 4, **caractérisé en ce que**, au cours de l'étape d'augmentation du degré désiré de surchauffe (ΔTₛₑₜ) pour la commande de la soupape de détente, on augmente d'une certaine valeur (δ) le degré désiré de surchauffe (ΔTₛₑₜ).

6. Procédé selon l'une quelconque des revendications précédentes, **caractérisé en ce que** le point d'injection (P) est situé en aval par rapport à la soupape de détente électronique (7) et en amont par rapport au compresseur (5).

7. Procédé selon l'une quelconque des revendications précédentes, **caractérisé en ce que** le procédé est utilisé pour sécher un gaz qui provient d'un compresseur.

8. Dispositif pour le refroidissement d'un gaz à froid dans lequel de la vapeur d'eau dans le gaz est condensée par refroidissement du gaz, dans lequel ce dispositif (1) est équipé d'un échangeur de chaleur (2) comprenant une zone secondaire (9) à travers laquelle le gaz qui doit être séché est guidé pour le refroidissement du gaz et comprenant une zone primaire qui forme l'évaporateur (3) d'un circuit de refroidissement fermé (4) dans lequel un agent de refroidissement peut circuler au moyen d'un compresseur (5) en aval par rapport à l'évaporateur (3), dans lequel, en aval, entre le compresseur (5) et l'évaporateur (3), le circuit de refroidissement (4) comprend successivement un condenseur (6) et un moyen de détente (7) à travers lequel l'agent de refroidissement peut circuler et un conduit de dérivation (15) dans lequel est contenue une soupape de dérivation (17) pour les gaz chauds, qui relie la sortie du compresseur (5) à un point d'injection (P) en amont par rapport au compresseur (5), **caractérisé en ce que** le circuit de refroidissement fermé (4) ne contient pas de séparateur de liquide et **en ce que** les moyens de détente (7) sont réalisés via une soupape de détente électronique (7) pour le réglage d'un degré désiré de surchauffe (ΔTₛₑₜ) de l'agent de refroidissement après l'évaporateur (3), dans lequel le dispositif (1) comprend une unité de commande (18) qui va commander la soupape de détente (7) d'une manière telle que l'agent de refroidissement est toujours surchauffé à l'entrée du compresseur (5), dans lequel la soupape de dérivation (17) pour les gaz chauds est une soupape de dérivation électronique (17) pour les gaz chauds qui est aussi commandée par l'unité de commande (18), et dans lequel, lors du démarrage du circuit de refroidissement (4), l'unité de commande (18) va commander la soupape de détente électronique (7) et la soupape de dérivation électronique (17) pour les gaz chauds, d'une manière telle que la soupape de détente électronique (7) est maintenue fermée tandis que la soupape de dérivation électronique (17) pour les gaz chauds est commandée jusqu'à ce que la pression de l'évaporateur (pᵥ) ait atteint une valeur désirée ; après quoi, l'unité de commande (18) va commander la soupape de détente électronique (7) d'une manière telle que le degré désiré de surchauffe (ΔTₛₑₜ) de l'agent de refroidissement après l'évaporateur (3) est atteint.

9. Dispositif selon la revendication 8, **caractérisé en ce que**, lors de la mise hors tension du circuit de refroidissement (4), l'unité de commande (18) va commander la soupape de détente électronique (7) et la soupape de dérivation électronique (17) pour les gaz chauds, d'une manière telle que la soupape de détente électronique (7) est complètement fermée, tandis que la soupape de dérivation électronique (17) pour les gaz chauds maintient constante la pression de l'évaporateur (pᵥ) avant la fermeture du compresseur (5).

10. Dispositif selon la revendication 9, **caractérisé en ce que**, lors de la mise hors tension du circuit de refroidissement (4), l'unité de commande (18) ferme la soupape de détente électronique (7) de manière progressive.

11. Dispositif selon l'une quelconque des revendications précédentes 8 à 10, **caractérisé en ce que** le dispositif (1) est équipé de moyens (19, 20) pour déterminer le degré de surchauffe (ΔT) de l'agent de refroidissement après l'évaporateur (3), dans lequel, lorsque, au cours de l'activation du circuit de refroidissement (4), le degré de surchauffe (ΔT) devient inférieur à une valeur seuil (E), l'unité de commande (18) va augmenter le degré désiré de surchauffe (ΔTₛₑₜ) et va commander la soupape de détente électronique (7) sur base de ce degré désiré de surchauffe augmenté (ΔTₛₑₜ) jusqu'à ce que le degré de surchauffe (ΔT) soit à nouveau supérieur à la valeur seuil susmentionnée (E).

12. Dispositif selon la revendication 11, **caractérisé en ce que** l'unité de commande va augmenter le degré désiré de surchauffe (ΔTₛₑₜ) d'une certaine valeur (δ).

13. Dispositif selon l'une quelconque des revendications précédentes 8 à 12, **caractérisé en ce que** le point d'injection (P) est situé en aval par rapport à la soupape de détente électronique (7) et en amont par rapport au compresseur (5).

14. Dispositif selon l'une quelconque des revendications précédentes 8 à 13, **caractérisé en ce que** le gaz qui doit être séché provient d'un compresseur.
